# EUROPEAN PATENT APPLICATION

(11) **EP 2 302 633 A1**
(43) Date of publication of application: **30.03.2011**
(21) Application number: 10162050.8
(22) Date of filing: 05.05.2010
(51) Int. Cl.: G11B 27/034, G11B 27/10, G11B 27/32, H04N 7/26, H04N 9/804, G06F 17/30, G11B 27/30

(54) **Storage device and driving method thereof**

(30) Priority: 24.09.2009 KR 20090090473
(71) Applicant: Samsung Electronics Co., Ltd., Yeongtong-gu Suwon-si, Gyeonggi-do (KR)
(72) Inventor: Park, Yong-jun, Seoul (KR); Park, Seung-kwon, Gyeonggi-do (KR); Lee, Hee-soo, Gyeonggi-do (KR); Choi, Jin-seok, Gyeonggi-do (KR)
(74) Representative: Walaski, Jan Filip

(57) **Abstract**

A storage device and a driving method thereof which enables a stored media file to be played in any media player are described. The storage device includes a storage unit which stores a media file of a media player. The storage device includes a connector which is connected to the media player. A converter converts the media file stored in the storage unit based on an attribute of the media file.A controller controls the converter to convert the media file to be played by the media player, based on the attribute, and transmits the converted media file to the media player. This allows a media file which stored in a storage device to be played on any media player.

## Description

The present invention relates to a storage device and a driving method thereof, and more particularly, to a storage device and a driving method thereof which enables a stored media file to be played in any media player.

Although media players such as portable media players (PMPs) and car media centers are widespread and various types of media files exist, an increasing number of media files are not played by the media players. This results from the PMPs and car media centers playing only some media files due to limitations of their decoding performance. If a user desires to play a media file which is not supported by the PMP, he/she should additionally install a coder/decoder (codec). Unlike a personal computer (PC), the limitation of hardware resources may limit the additional installation of the codec. Even if the installation is available, the media file may not be played efficiently due to lack of decoding performance. A flash memory should erase a particular block therein before reading it. Each block has a number of erasing limitations (usually 100,000 times), and repetitive erasing operations may adversely affect the life span of the flash memory. If a large media file is stored in the flash memory, it takes up a large capacity of the flash memory. Then, a plurality of erasing operations is performed with respect to the blocks to store the media file in the flash memory, thereby reducing the life span of the flash memory.

It is an aspect of the exemplary embodiments to provide a storage device and a driving method thereof which converts a media file stored therein to be consistent with a media player to play the media file.

It is another aspect of the exemplary embodiments to provide a storage device and a driving method thereof which converts a media file at a high compression rate to reduce the storage space required for the media file and prevents a reduction of the life span of a flash memory.

The foregoing and/or other aspects of the exemplary embodiments can be achieved by providing a storage device which stores therein a media file of a media player, the storage device including: a connector which is connected to the media player; a storage unit which stores therein a media file; a converter which converts the media file stored in the storage unit based on the attribute; and a controller which controls the converter to convert the media file to be played by the media player based on the attribute and to transmit the converted media file to the media player.

The controller may receive and analyze attribute information of the media player, and control the converter to convert the media file based on the analyzed attribute information.

The attribute information of the media player may include at least one of a manufacturer, a model name, an audio codec, a video codec, a resolution, digital rights management (DRM) information, and a sample rate of the media player.

The controller may store the analyzed attribute information in the storage unit.

The converter may include a transcoder.

The controller may control the converter to compress the media file to be stored in the storage unit.

Another aspect of the exemplary embodiments can be achieved by providing a driving method of a storage device which stores therein a media file of a media player, the method including: determining an attribute of the media player; converting the media file to be played by the media player, based on the attribute, and transmitting the converted media file to the media player.

The determining the attribute of the media player may include requesting attribute information of the media player; and receiving the attribute information of the media player.

The attribute information of the media player may include at least one of a manufacturer, a model name, an audio codec, a video codec, a resolution, digital rights management (DRM) information and a sample rate of the media player.

The storage device may store therein the attribute information of the media player.

The storage device may convert the media file, basaed on the attribute, through a transcoder.

The storage device may compress and store therein the media file.

The above and/or other aspects of the exemplary embodiments will become apparent and more readily appreciated from the following description, taken in conjunction with the accompanying drawings in which:
FIG. 1 illustrates a storage device according to an exemplary embodiment;
FIG. 2 is a block diagram of the storage device according to the exemplary embodiment;
FIG. 3 is a flowchart which illustrates an operation of the storage device according to the exemplary embodiment; and
FIG. 4 is a flowchart which illustrates an attribute determining process of a media player by the storage device according to the exemplary embodiment.

Hereinafter, exemplary embodiments will be described with reference to accompanying drawings, wherein like numerals refer to like elements and repetitive descriptions will be avoided as necessary.

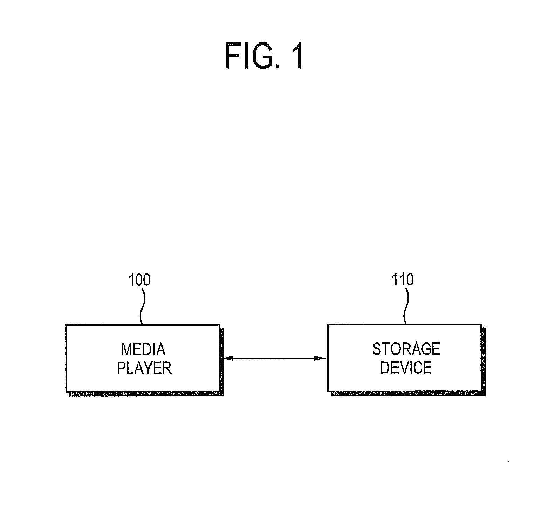

FIG. 1 illustrates a storage device 110 according to an exemplary embodiment. The storage device 110 according to the present exemplary embodiment stores therein a media file played by a media player 100. The storage device 110 may include a portable storage device such as a universal serial bus (USB) which is connected to the media player 100. The media player 100 which has a personal video record (PVR) function or a time shift record (TSR) function, includes a portable media player and a car media center. The media player 100 may be connected to the storage device 110 storing therein a media file to play the media file received from the storage device 110. The storage device 110 according to the present exemplary embodiment may store therein a media file upon reception from the media player 100. Upon receiving the media file from the storage device 110 according to the present exemplary embodiment, the media player 100 plays the received media file by using a decoder or a digital analog converter (DAC). If the received media file is not supported by the media player 100, the decoder may not read the media file, resulting in a failure to play the received media file. Thus, the storage device 110 according to the present exemplary embodiment converts a media file before transmission so that the media player 100 may play the media file transmitted from the storage device 110. Hereinafter, the storage device 110 according to the present exemplary embodiment will be described in detail.

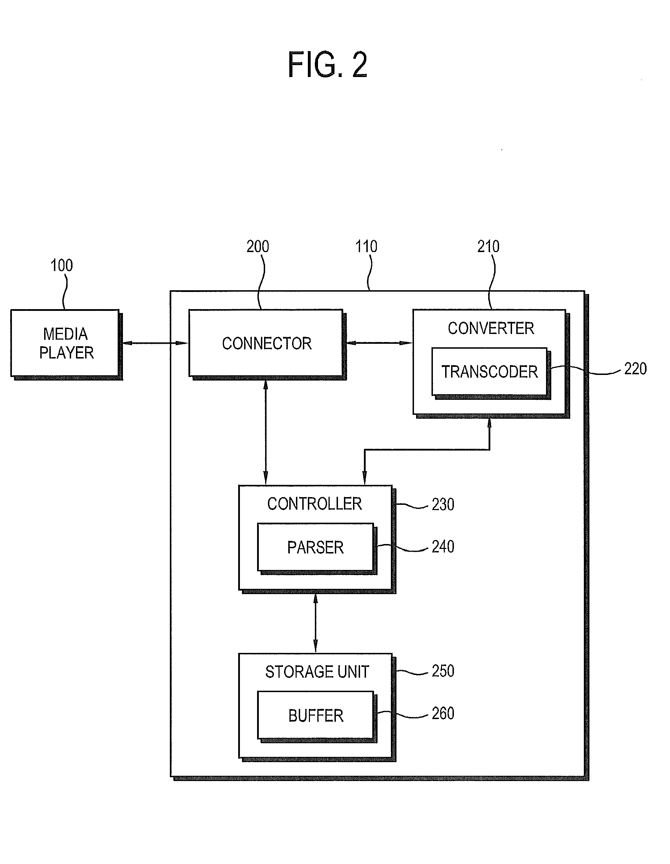

FIG. 2 is a block diagram of the storage device 110 according to the exemplary embodiment. As shown therein, the storage device 110 according to the present exemplary embodiment includes a connector 200, a converter 210, a storage unit 250 and a controller 230. The connector 200 is connected with the media player 100, and includes an interface and an input/out means to input and output data including media files. The storage unit 250 stores therein data including media files, and includes a flash memory and a buffer 260. The converter 210 converts and stores an input media file or converts and outputs the stored media file. The converter 210 includes a transcoder 220. The controller 230 determines an attribute of the media player 100 and controls the converter 210 to convert a media file based on the determined attribute. The controller 230 includes a parser 240. To store a media file, the storage device 110 according to the present exemplary embodiment is connected to the media player 100 and receives the media file therefrom. Upon reception of the media file, the controller 230 controls the converter 210 to convert the media file into a file similar to an original file in picture quality and sound quality and at a high compression rate. For example, the controller 230 controls the converter 210 to convert a MPEG2 TS into a file having a good compression rate like H.264. The file is converted through the transcoder 220. The transcoder 220 transcodes a media file encoded in a particular codec, resolution and bit rate into another codec, resolution and bit rate. That is, the transcoder 220 converts a digital media file from a particular format into another format. If the flash memory is used to convert and store the media file, an erasing operation for a particular area of the flash memory is reduced, thereby preventing a life span of the flash memory from being shortened.

When the media player 100 is connected to the storage device 110 to play a media file transmitted from the storage device 110, the controller 230 requests attribute information of the media player 100 through the connector 200. The attribute information of the media player 100 may include a manufacturer, a model name, an audio codec, a video codec, a resolution, digital rights management (DRM) information and a sample rate of the media player 100. When the media player 100 transmits the attribute information to the storage device 110 according to the present exemplary embodiment, the controller 230 determines the attribute information of the media player 100 through the parser 240. The parser 240, which is used to parse the attribute information, determines the type of the media file playable by the media player 100 upon reception of the attribute information of the media player 100. The determined attribute information of the media player 100 is stored in the buffer 260 of the storage unit 250. If the attribute of the media player 100 is determined by the parser 240, the controller 230 controls the transcoder 220 of the converter 210 to convert the media file into a file playable by the media player 100. The transcoder 220 converts the resultion, codec, bit rate, sampling rate and the capacity of the media file to be consistent with the capacity of the storage unit, the resolution of a display, the decoding capacity and the playable codec of the media player 100. The converter 210 may convert the media file through a scaler (not shown) to be consistent with a screen of the media player 100. If the conversion of the media file is completed, the converter 210 transmits the converted media file to the media player 100 through the connector 200. The media player 100 may then play the media file by using a decoder or a DAC. If the media player 100 may not transmit the attribute information of the media player 100 to the storage device 110 according to the present exemplary embodiment, the controller 230 may determine a type of the media file playable by the media player 100 through a particular manipulation. That is, the buffer 260 stores therein the attribute information of the media layer 100 such as the manufacturer and the model name of various media players. If a user selects a particular manufacturer and model name of the media player 100, the controller 230 determines a type of the media file supported by the media player 100 of the concerned manufacturer or the model, controls the transcoder 220 to convert the stored media file and transmits the converted media file to the media player 100. As described above, the storage device 110 according to the present exemplary embodiment may determine the type of the media file playable by the media player 100, convert the stored media file based on the determined information and transmit the converted media file to the media player 100, thereby providing a media file that is playable by any media player.

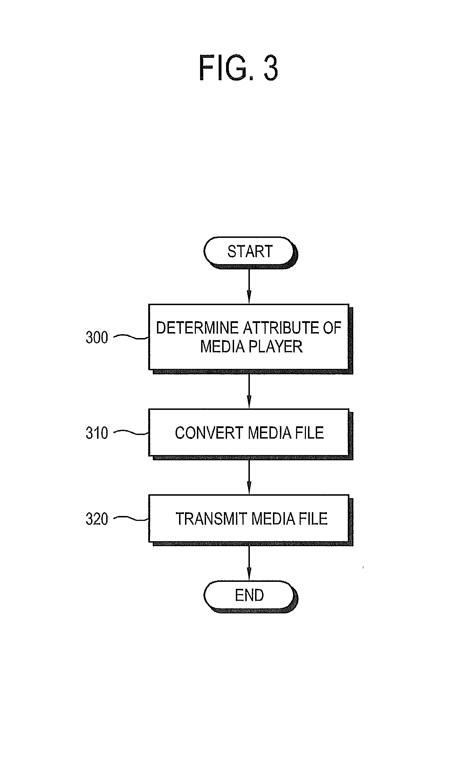

FIG. 3 is a flowchart which illustrates an operation of the storage device 110 according to the exemplary embodiment. If the media player 100 is connected to the storage device 110 according to the present exemplary embodiment, the controller 230 determines the attribute of the media player 100 and the type of the media file playable by the media player 100 (S300). If the type of the media file is determined, the controller 230 controls the transcoder 220 to convert the stored media file to play the media file (S310). Upon completion of the conversion, the media file is transmitted to the media player 100 (S320).

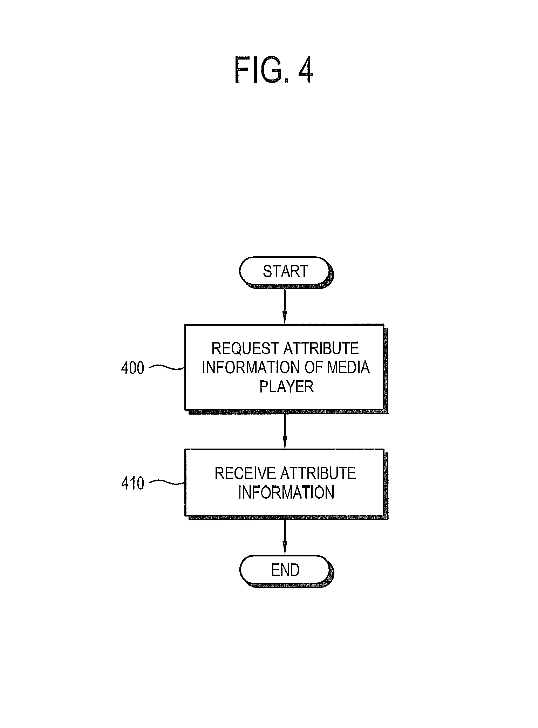

FIG. 4 is a flowchart which illustrates an attribute determining process of the media player 100 by the storage device 110 according to the exemplary embodiment. If the media player 100 is connected to the storage device 110 according to the present exemplary embodiment, the controller 230 requests the attribute information of the media player 100 (S400). If the attribute information of the media player 100 is received, the parser 240 parses the attribute information of the media player 100 and determines the type of the media file playable by the media player 100 (S410).

As described above, a storage device and a driving method according to the exemplary embodiments converts a media file to be consistent with a media player, based on an attribute, to play the media file through any media player.

Further, the storage device and the driving method thereof according to the exemplary embodiments converts a media file at a high compression rate to store the media file therein, thereby reducing a storage space of the media file and preventing a reduction of the life span of a flash memory.

Although a few exemplary embodiments have been shown and described, it will be appreciated by those skilled in the art that changes may be made in these exemplary embodiments without departing from the principles of the invention, the scope of which is defined in the appended claims.

## Claims

1. A storage device for storing a media file of a media player, the storage device comprising:
a connector which is configured for connecting to the media player;
a storage unit which stores therein a media file to be played on the media player;
a converter which converts the media file stored in the storage unit based on an attribute of the media file; and
a controller that controls the converter which converts the media file to be played by the media player based on the attribute and to transmit the converted media file to the media player.

2. The storage device according to claim 1, wherein the controller receives and analyzes attribute information of the media player, and controls the converter to convert the attribute of the media file based on the analyzed attribute information.

3. The storage device according to claim 2, wherein the attribute information of the media player comprises at least one of a manufacturer, a model name, an audio codec, a video codec, a resolution, digital rights management (DRM) information, and a sample rate of the media player.

4. The storage device according to claim 2, wherein the controller stores the analyzed attribute information in the storage unit.

5. The storage device according to claim 1, wherein the converter includes a transcoder.

6. The storage device according to claim 1, wherein the controller controls the converter to compress the media file to be stored in the storage unit.

7. A driving method of a storage device which stores therein a media file of a media player, the method comprising:
determining an attribute of the media player; and
converting the media file to be played by the media player based on the attribute, and transmitting the converted media file for playing of the media file on the media player.

8. The method according to claim 7, wherein the determining the attribute of the media player includes requesting attribute information of the media player; and receiving the attribute information of the media player.

9. The method according to claim 8, wherein the attribute information of the media player comprises at least one of a manufacturer, a model name, an audio codec, a video codec, a resolution, digital rights management (DRM) information and a sample rate of the media player.

10. The method according to claim 8, wherein the storage device stores therein the attribute information of the media player.

11. The method according to claim 7, wherein the storage device converts the attribute of the media file through a transcoder.

12. The method according to claim 7, wherein the storage device compresses and stores therein the media file.
